# FASCICULE DE BREVET EUROPEEN

(11) **EP 4 008 970 B1**
(45) Date de publication et mention de la délivrance du brevet: **23.10.2024**
(21) Numéro de dépôt: 21211799.8
(22) Date de dépôt: 01.12.2021
(51) Int. Cl.: F24D 10/00, F24F 5/00

(54) **SOUS-STATION POUR SOURCE DE CHALEUR ET PROCÉDÉ DE FONCTIONNEMENT ASSOCIÉ**
UNTERSTATION FÜR WÄRMEQUELLE UND ENTSPRECHENDES BETRIEBSVERFAHREN
SUBSTATION FOR HEAT SOURCE AND OPERATING METHOD THEREOF

(30) Priorité: 02.12.2020 FR 2012546
(43) Date de publication de la demande: 08.06.2022
(73) Titulaire: Commissariat à l'Energie Atomique et aux Energies Alternatives, 75015 Paris (FR); Compagnie de Chauffage Intercommunale de l'Agglomeration Grenobloise, 38000 Grenoble (FR)
(72) Inventeur: PHAN, Hai Trieu, 38054 GRENOBLE Cedex 09 (FR); PAULUS, Cédric, 38054 GRENOBLE Cedex 09 (FR); DUMAS, Olivier, 38420 SAINT JEAN LE VIEUX (FR)
(74) Mandataire: Hautier IP

(56) Documents cités:
- WO-A1-2020/196940
- WO-A1-95/20133
- KR-B1- 102 087 862

## Description

### DOMAINE TECHNIQUE

La présente invention concerne le domaine de la gestion d'une source de chaleur pour la production d'eau chaude sanitaire (ECS), de chauffage ou de froid.

Elle concerne plus particulièrement une sous-station pour source de chaleur pour la production de chauffage et de froid, et un procédé de fonctionnement associé.

Elle trouve pour application particulièrement avantageuse le service de fourniture de chaud, de froid et d'eau chaude sanitaire pour les bâtiments (de logements, tertiaires, commerciaux, ...).

### ETAT DE LA TECHNIQUE

Afin d'offrir un service de fourniture de froid, il est connu de coupler une machine à absorption à un réseau de chaleur, comme synthétisé dans l'article de Valerie Eveloy et Dereje S. Ayou, de 2019, intitulé « Sustainable District Cooling Systems: Status, Challenges, and Future Opportunities, with Emphasis on Cooling-Dominated Régions », dans la revue « Energies » de MDPI.

En Europe, nous pouvons citer deux exemples de réseaux de froid, celui de Barcelone et celui d'Helsinki, qui proposent des groupes frigorifiques à absorption pour une production de froid.

D'un point de vue économique, l'utilisation d'une machine à absorption pour la production de froid est intéressante quand la chaleur est de très bas coût, voir même gratuite. D'après la thèse de Martin Dominik Schöpfer, de 2015, intitulée «Absorption chillers: their feasibility in district heating networks and comparison to alternative technologies », le coût de la chaleur doit être inférieur à 20 $/MWth pour que la machine à absorption devienne compétitive, dans l'hypothèse du coût actuel de l'électricité. Cette contrainte est un verrou à lever pour que l'utilisation de machines à absorption se développe davantage dans les réseaux de froid.

Les solutions d'art antérieur susmentionnées ne permettent pas de :
- générer du chauffage à température basse (par exemple sensiblement égale à 40°C) ou moyenne (par exemple comprise entre 40 et 65°C) par utilisation de la machine à absorption à partir de la chaleur fournie par la source de chaleur et avec un coefficient de performance thermique (COPₜₕ) supérieur à 1,
- distribuer du chauffage, du froid et de la chaleur pour l'ECS par un réseau de quatre canalisations au plus, et
- lisser les appels de puissance sur le réseau pour le chauffage de l'eau chaude et les appels de puissance pour la production du froid ou du chauffage.

Par ailleurs, il est connu qu'une machine à absorption peut être utilisée pour une production d'eau chaude à température moyenne (par exemple comprise entre 40 et 65°C). Cette utilisation est intéressante car elle offre un coefficient de performance supérieur à 1, économisant la chaleur du réseau primaire. Un exemple d'architecture d'un système de production d'eau à une température moyenne de 45°C par machine à absorption couplée à un réseau de chaleur et à un puits géothermique est décrit dans l'article N°109403 de Z. Song, N. Wang, S. You et al., de 2019, paru dans la revue « Energy & Buildings », vol. 202.

Cette intégration d'une machine à absorption ne permet pas de :
- générer du froid pour la climatisation ou le rafraichissement,
- générer du chauffage pour l'eau chaude sanitaire (à une température sensiblement égale à 70°C),
- distribuer du chauffage, du froid et de la chaleur pour l'ECS par un réseau de quatre canalisations au plus, et
- lisser les appels de puissance sur le réseau pour le chauffage de l'eau chaude sanitaire et les appels de puissance pour la production du froid ou du chauffage.

Il est également connu, du document de brevet WO 2020/196940 A1, un système de chauffage urbain à basse température permettant d'augmenter l'efficacité du chauffage, qui est conforme au préambule de la revendication 1 annexée.

Un objet de la présente invention est donc de proposer une sous-station pour source de chaleur et un procédé de fonctionnement associé qui permettent de pallier au moins des inconvénients de l'art antérieur.

Plus particulièrement, un objet de la présente invention est donc de proposer une sous-station pour source de chaleur et un procédé de fonctionnement associé qui permettent :
- générer du froid pour la climatisation ou le rafraichissement,
- générer du chauffage à température basse (par exemple sensiblement égale à 40°C) ou moyenne (par exemple comprise entre 40 et 65°C), le cas échéant avec un coefficient de performance thermique (COPth) supérieur à 1,
- générer du chauffage pour l'eau chaude sanitaire (à une température sensiblement égale à 70°C), et
- distribuer à la fois de la chaleur pour l'ECS et du chauffage ou du froid par un réseau de quatre canalisations ou moins.

En complément, la sous-station et le procédé proposés peuvent viser à permettre de :
- lisser les appels de puissance sur la source pour la production de chaleur pour l'eau chaude sanitaire et pour la production du froid ou du chauffage.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un premier aspect de l'invention, on prévoit une sous-station pour source de chaleur conforme à la revendication 1 annexée.

De manière facultative, la sous-station telle qu'introduite ci-dessus peut en outre présenter au moins l'une quelconque des caractéristiques suivantes qui peuvent être prises séparément ou en combinaison.

La machine à absorption peut être destinée à être couplée thermiquement avec un circuit de refroidissement ou de source froide.

La sous-station peut comprendre en outre un dispositif de stockage thermique comprenant une entrée d'alimentation et une sortie d'évacuation, le dispositif de stockage thermique étant par exemple choisi parmi un dispositif de stockage thermique par eau liquide avec ou sans pressurisation et un dispositif de stockage thermique par matériau à changement de phase ; et
- l'entrée d'alimentation du dispositif de stockage thermique est en liaison fluidique avec la première sortie d'évacuation de la machine à absorption et la sortie d'évacuation du dispositif de stockage thermique est en liaison fluidique avec l'entrée d'alimentation de l'échangeur thermique, la première sortie d'évacuation de la machine à absorption étant en liaison fluidique avec l'entrée d'alimentation de l'échangeur thermique via le dispositif de stockage thermique, ou
- la sous-station comprend en outre au moins un commutateur fluidique de charge et de décharge, agencé pour commuter la sous-station entre :
   i. une configuration de charge du dispositif de stockage thermique dans laquelle l'entrée d'alimentation du dispositif de stockage thermique est destinée à être en liaison fluidique avec la canalisation aller de la source de chaleur et la sortie d'évacuation du dispositif de stockage thermique est destinée à être en liaison fluidique avec la canalisation retour de la source de chaleur, et
   ii. une configuration de décharge du dispositif de stockage thermique dans laquelle l'entrée d'alimentation du dispositif de stockage thermique est en liaison fluidique avec la première entrée d'alimentation de la machine à absorption et la sortie d'évacuation du dispositif de stockage thermique est en liaison fluidique avec la sortie d'évacuation de l'échangeur thermique, ou
- la sous-station comprend en outre au moins un contrôleur de gestion fluidique, agencé pour gérer une configuration d'alimentation de la machine à absorption par la source de chaleur et/ou le dispositif de stockage thermique, dans laquelle :
   i. l'entrée d'alimentation du dispositif de stockage thermique est en liaison fluidique avec la sortie d'évacuation de l'échangeur thermique et/ou avec la canalisation retour de la source de chaleur, et
   ii. la sortie d'évacuation du dispositif de stockage thermique est en liaison fluidique avec la première entrée d'alimentation de la machine à absorption et/ou avec la canalisation aller de la source de chaleur.

La sous-station comprend en outre une machine à compression mécanique de vapeur couplée à la machine à absorption.

Selon un deuxième aspect de l'invention, on prévoit un système de production de chaleur pour eau chaude sanitaire (ECS), de chauffage et de froid, comprenant une source de chaleur, au moins un circuit de distribution de chauffage et de froid, au moins un circuit de distribution d'eau chaude sanitaire et au moins une sous-station telle qu'introduite ci-dessus, dans lequel la source de chaleur comprend au moins l'un parmi :
- un réseau de chaleur,
- un réseau de récupération de chaleur fatale
- un dispositif de captation de chaleur solaire, et
- un dispositif de stockage thermique dont une entrée d'alimentation est en liaison fluidique avec la canalisation aller de la source de chaleur et dont une sortie d'évacuation est en liaison fluidique avec la canalisation retour de la source de chaleur.

Le système peut comprendre en outre au moins un dispositif de stockage thermique additionnel agencé sur au moins l'une parmi une canalisation aller du circuit de distribution de chauffage et de froid et une canalisation aller du circuit de distribution d'eau chaude sanitaire.

Selon une caractéristique optionnelle du système, le circuit de distribution de chauffage et de froid et le circuit de distribution d'eau chaude sanitaire peuvent comprendre une même canalisation aller et/ou une même canalisation retour. Le cas échéant, le circuit de distribution de chauffage et de froid et le circuit de distribution d'eau chaude sanitaire sont utilisés en alternance.

Selon un deuxième aspect de l'invention, on prévoit un procédé de fonctionnement d'une sous-station conforme à la revendication 8 annexée.

De manière facultative, le procédé de fonctionnement tel qu'introduit ci-dessus peut en outre présenter au moins l'une quelconque des étapes suivantes qui peuvent être prises séparément ou en combinaison.

Avec la sous-station comprenant en outre un dispositif de stockage thermique, le procédé peut comprendre en outre :
- le lissage de pics d'appel de puissance sur le circuit de distribution d'eau chaude sanitaire par mise en oeuvre du dispositif de stockage thermique, une entrée d'alimentation du dispositif de stockage thermique étant en liaison fluidique avec la première sortie d'évacuation de la machine à absorption et une sortie d'évacuation du dispositif de stockage thermique étant en liaison fluidique avec l'entrée d'alimentation de l'échangeur thermique, la première sortie d'évacuation de la machine à absorption étant en liaison fluidique avec l'entrée d'alimentation de l'échangeur thermique via le dispositif de stockage thermique ;

Avec la sous-station comprenant en outre un dispositif de stockage thermique et au moins un commutateur fluidique de charge et de décharge, ce dernier étant agencé pour commuter la sous-station entre :
- une configuration de charge du dispositif de stockage thermique dans laquelle une entrée d'alimentation du dispositif de stockage thermique est destinée à être en liaison fluidique avec la canalisation aller de la source de chaleur et une sortie d'évacuation du dispositif de stockage thermique est destinée à être en liaison fluidique avec la canalisation retour de la source de chaleur, et
- une configuration de décharge du dispositif de stockage thermique dans laquelle l'entrée d'alimentation du dispositif de stockage thermique est en liaison fluidique avec la première entrée d'alimentation de la machine à absorption et la sortie d'évacuation du dispositif de stockage thermique est en liaison fluidique avec la sortie d'évacuation de l'échangeur thermique,
le procédé peut comprendre en outre :
- le lissage de pics d'appel de puissance sur le circuit de distribution d'eau chaude sanitaire par mise en oeuvre du dispositif de stockage thermique et du commutateur fluidique de charge et de décharge ; ou

Avec la sous-station comprenant en outre un dispositif de stockage thermique et au moins un contrôleur de gestion fluidique, ce dernier étant agencé pour gérer une configuration d'alimentation de la machine à absorption par la source de chaleur et/ou le dispositif de stockage thermique, dans laquelle :
- l'entrée d'alimentation du dispositif de stockage thermique est en liaison fluidique avec la sortie d'évacuation de l'échangeur thermique et/ou avec la canalisation retour de la source de chaleur, et
- la sortie d'évacuation du dispositif de stockage thermique est en liaison fluidique avec la première entrée d'alimentation de la machine à absorption et/ou avec la canalisation aller de la source de chaleur,
le procédé peut comprendre en outre :
- le lissage de pics d'appel de puissance sur le circuit de distribution de chauffage et de froid et sur le circuit de distribution d'eau chaude sanitaire par mise en oeuvre du dispositif de stockage thermique et du contrôleur de gestion fluidique.

Ainsi, l'invention selon ses différents aspects permet de pallier au moins des inconvénients de l'art antérieur, notamment en fournissant une solution pour :
- générer du froid pour la climatisation ou le rafraichissement,
- générer du chauffage à température basse (par exemple sensiblement égale à 40°C) ou moyenne (par exemple comprise entre 40 et 65°C), le cas échéant avec un coefficient de performance thermique (COPth) supérieur à 1,
- générer du chauffage pour l'eau chaude sanitaire (à une température sensiblement égale à 70°C), et
- distribuer à la fois de la chaleur pour l'ECS et du chauffage ou du froid par un réseau de quatre canalisations ou moins.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente une vue schématique d'un système de production de chaleur pour l'eau chaude sanitaire et de froid mettant en oeuvre une sous-station pour source de chaleur selon un premier mode de réalisation de l'invention.
La figure 2 représente une vue schématique d'un système de production de chaleur pour l'eau chaude sanitaire et de chauffage mettant en oeuvre une sous-station pour source de chaleur selon un deuxième mode de réalisation de l'invention.
La figure 3 représente une vue schématique d'un système de production de chaleur pour l'eau chaude sanitaire et de froid mettant en oeuvre une sous-station pour source de chaleur selon un troisième mode de réalisation de l'invention.
La figure 4 représente une vue schématique d'un système de production de chaleur pour l'eau chaude sanitaire et de chauffage mettant en oeuvre une sous-station pour source de chaleur selon le troisième mode de réalisation de l'invention.
La figure 5 représente une vue schématique d'un système de production de chaleur pour l'eau chaude sanitaire et de chauffage mettant en oeuvre une sous-station pour source de chaleur selon un quatrième mode de réalisation de l'invention ; le même principe est applicable pour la production de chaleur pour l'eau chaude sanitaire et pour la production de froid.
La figure 6 représente une vue schématique d'un système de production de chaleur pour l'eau chaude sanitaire et de chauffage mettant en oeuvre une sous-station pour source de chaleur selon un cinquième mode de réalisation de l'invention ; le même principe est applicable pour la production d'eau chaude sanitaire et la production de froid.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Selon son premier aspect, l'invention porte sur une sous-station 2 pour source de chaleur 1. Dans chacun des modes de réalisation décrits ci-dessus, la sous-station 2 selon le premier aspect de l'invention comprend au moins une machine à absorption 21 et un échangeur thermique 22.

En référence à chacune des figures annexées, la sous-station 2 selon le premier aspect de l'invention est plus particulièrement telle que :
- une première entrée d'alimentation 211 de la machine à absorption 21 est destinée à être en liaison fluidique avec une canalisation aller 11 de la source de chaleur 1 ;
- une sortie d'évacuation 222 de l'échangeur thermique 22 est destinée à être en liaison fluidique avec une canalisation retour 12 de la source de chaleur 1 ;
- une première sortie d'évacuation 212 de la machine à absorption 21 est en liaison fluidique avec une entrée d'alimentation 221 de l'échangeur thermique 22 ;
- une seconde sortie d'évacuation 213 de la machine à absorption 21 étant destinée à être en liaison fluidique avec une canalisation aller 31 d'un circuit de distribution de chauffage et de froid 3 ; et
- une seconde entrée d'alimentation 214 de la machine à absorption 21 étant en liaison fluidique avec une canalisation retour 32 du circuit de distribution de chauffage et de froid 3.

En outre, l'échangeur thermique 22 est destiné à être couplé thermiquement avec un circuit de distribution d'eau chaude sanitaire 4.

Notons ici que la machine à absorption 21 mise en oeuvre dans cette invention peut être de couple de travail H₂O/LiBr ou NH₃/H₂O ou autres. De façon bien connue, elle comprend : un générateur, un absorbeur, un évaporateur, un condenseur et une pompe à solution. La pompe à solution est par exemple agencée entre l'absorbeur et le générateur de la machine à absorption 21. De façon connue, un détendeur de solution peut également être agencé entre l'absorbeur et le générateur de la machine à absorption 21. Par exemple, la machine à absorption 21 permet de réaliser un cycle à absorption à simple étage et simple effet. Le condensateur et le générateur de la machine à absorption 21 peuvent travailler à plus haute pression que l'évaporateur et l'absorbeur de la machine à absorption 21. La température de la solution peut être maximale au niveau du générateur de la machine à absorption 21 et peut être minimale au niveau de l'évaporateur de la machine à absorption 21.

L'invention selon son premier aspect porte donc sur un sous-élément, appelé « sous-station 2 », d'un système de production de chaleur pour eau chaude sanitaire, de chauffage et/ou de froid, depuis une source de chaleur 1.

Lorsque l'invention porte sur le système de distribution en lui-même, comme c'est le cas du deuxième aspect de l'invention, les destinations mentionnées ci-dessus en ce qui concerne certaines liaisons fluidiques deviennent effectives. Par la suite, il ne sera plus fait mention desdites destinations, par simplicité.

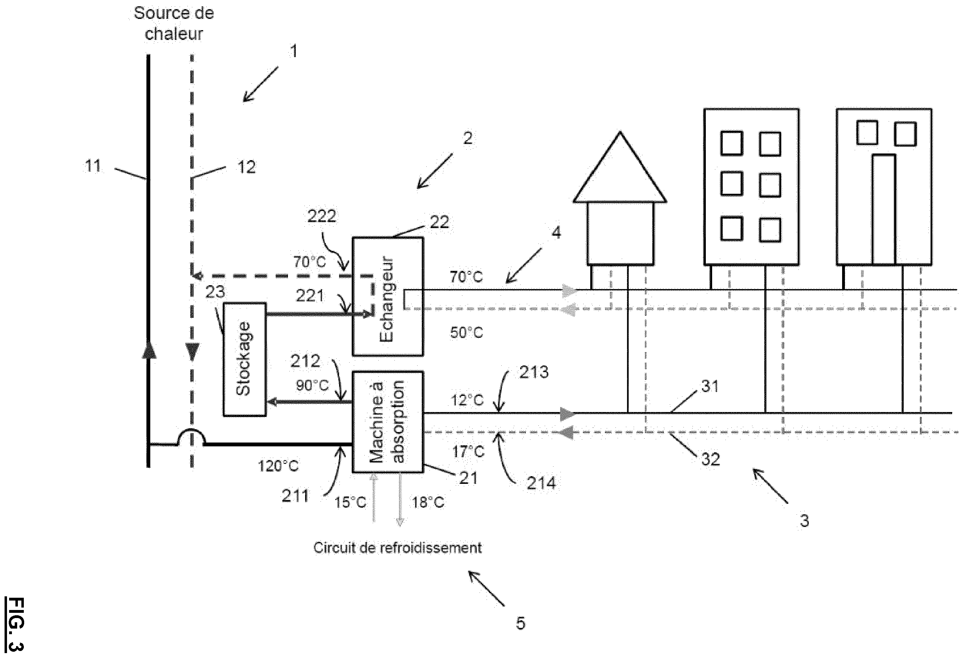

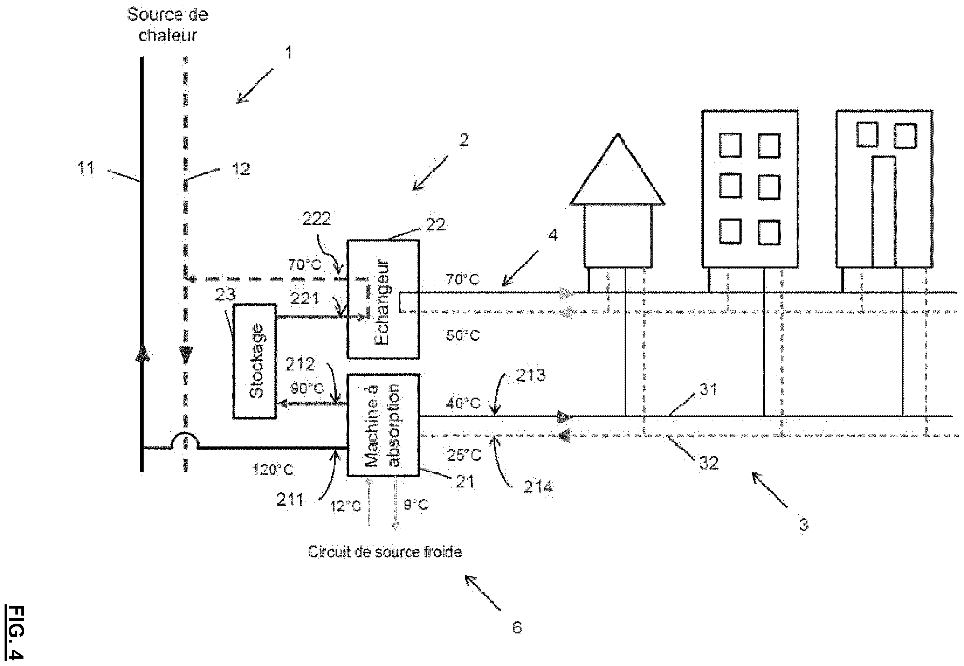

Il ressortira de la description qui suit que, lorsqu'un premier élément est en liaison fluidique avec un deuxième élément, il n'est pas exclu que cette liaison fluidique autorise la présence d'un autre élément entre les premier et deuxième éléments. Par exemple, sur les figures 3 et 4, la machine à absorption 21 et l'échangeur 22 sont en liaison fluidique l'un avec l'autre par l'intermédiaire du dispositif de stockage thermique 23 tel qu'illustré.

Notons ici que les différents circuits illustrés sur les figures sont au nombre de trois. Un premier des trois circuits illustrés représente le circuit de la source de chaleur 1 (en gras à gauche). Un deuxième des trois circuits illustrés représente le circuit de distribution de chauffage et de froid 3 (en bas à droite). Et un troisième des trois circuits illustrés représente le circuit de distribution d'eau chaude (en haut à droite). Chacun de ces circuits sont représentés par au moins une canalisation en trait plein et au moins une canalisation en tirets. Les canalisations en trait plein sont des canalisations dites « aller » et les canalisations en tirets sont des canalisations dites « retour », ou équivalemment « de bouclage ».

Différents types d'utilisateurs finaux (logements, bâtiments du tertiaire, commerciaux, ...) sont illustrés sur les dessins qui permettent d'imager le fait que l'invention selon ses différents aspects peut être déployé au profit de ces différents types d'utilisateurs finaux, dont notamment des habitations de particulier, en pavillon ou en immeuble, et des usines. Notons ici qu'une sous-station 2 selon le premier aspect de l'invention peut être prévue pour un ensemble de pavillons ou pour un immeuble ou pour une usine, au pour n'importe quelle combinaison de ceux-ci. En complément, plusieurs sous-stations 2 selon le premier aspect de l'invention peuvent être distribuées le long du circuit de la source de chaleur 1 de sorte que le système de production puisse être déployé au profit de différents ensembles d'utilisateurs.

Différentes sources de chaleur 1 sont envisageables, et ce indifféremment, pour chacun des modes de réalisation/fonctionnement décrits ci-dessous. Parmi ces différentes sources de chaleur 1, l'on peut considérer un réseau de chaleur, un réseau de récupération de chaleur fatale, un dispositif de captation de chaleur solaire, un dispositif de stockage thermique (dont une entrée d'alimentation est en liaison fluidique avec la canalisation aller 11 de la source de chaleur 1 et dont une sortie d'évacuation est en liaison fluidique avec la canalisation retour 12 de la source de chaleur 1) ou une combinaison d'une ou plusieurs de ces différentes sources de chaleur 1. De façon non limitative, les modes de réalisation décrits ci-dessus considèrent un réseau de chaleur en tant que source de chaleur 1.

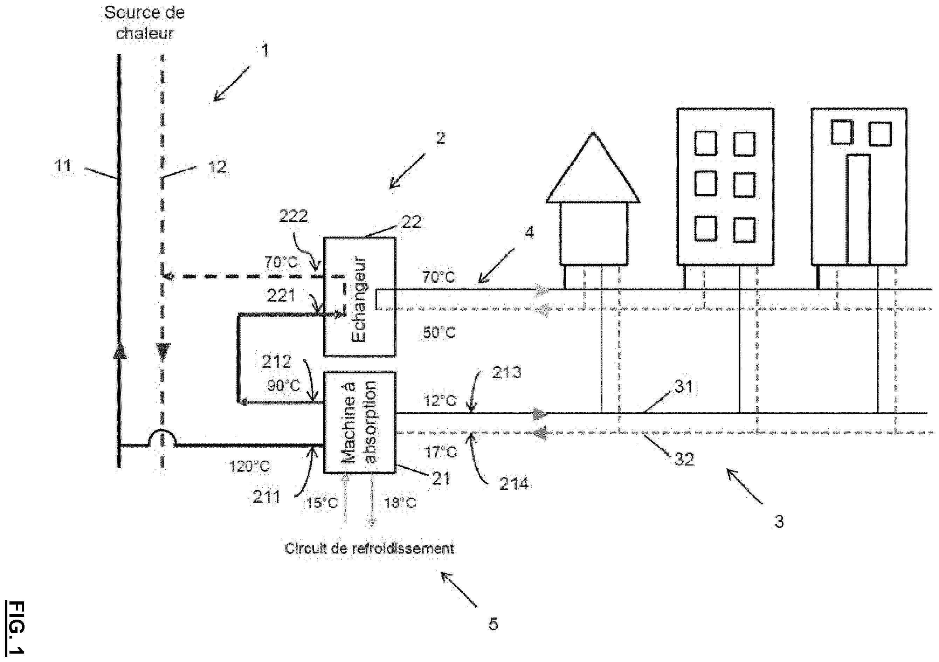

Un premier mode de réalisation de l'invention va maintenant être décrit en référence à la figure 1.

Sur la figure 1 est illustré un mode de production conçu pour répondre aux besoins des utilisateurs finaux principalement en été.

Le réseau de chaleur 1, et plus particulièrement une canalisation aller 11 du réseau de chaleur 1, alimente la machine à absorption 21 à son générateur par de l'eau chaude, à une température à titre d'exemple autour de 120°C. La machine à absorption 21 produit ainsi du froid à son évaporateur, à titre d'exemple à une température sensiblement égale à 12°C, pour un besoin de rafraichissement. Le rejet de chaleur au niveau des condenseurs et de l'absorbeur de la machine à absorption 21 se fait à travers un circuit de refroidissement 5. Ce dernier peut être connecté avec, ou comprendre, soit une source géothermique, soit avec des aérothermes, soit une combinaison des deux.

L'eau chaude sort de la machine à absorption 21, à une température à titre d'exemple autour de 90°C, pour entrer ensuite dans l'échangeur de chaleur 22 et fournir ainsi de la chaleur au circuit d'ECS 4. Sortant de l'échangeur thermique 22, l'eau chaude est à une température à titre d'exemple autour de 70°C et elle retourne ensuite dans le réseau de chaleur 1, et plus particulièrement dans une canalisation retour 12 du réseau de chaleur 1.

Dans ce mode de fonctionnement : les deux canalisations illustrant le circuit de distribution de chauffage et de froid 3 servent à transporter du froid et les deux canalisations du circuit d'ECS 4 servent à transporter de l'ECS. Notons que le circuit d'ECS 4 peut aussi être utilisé pour fournir du chauffage en cas de besoin.

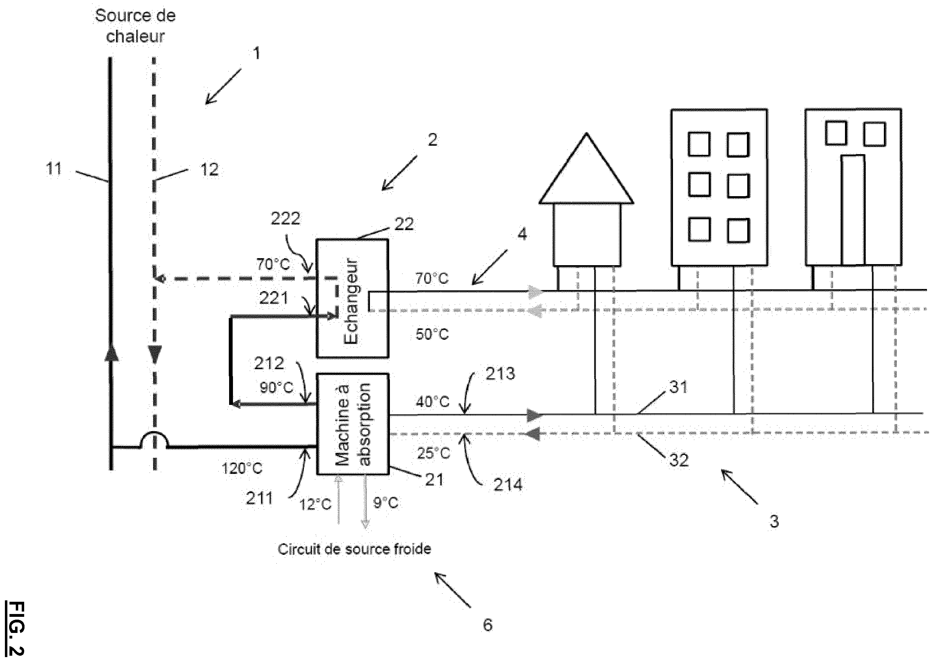

Un deuxième mode de réalisation de l'invention va maintenant être décrit en référence à la figure 2.

Sur la figure 2 est illustré un mode de production conçu pour répondre aux besoins des utilisateurs finaux principalement en hiver.

Le réseau de chaleur 1, et plus particulièrement une canalisation aller 11 du réseau de chaleur 1, alimente la machine à absorption 21 à son générateur par de l'eau chaude, à une température à titre d'exemple autour de 120°C. La machine à absorption 21 produit ainsi de l'eau à une température basse, à titre d'exemple sensiblement égale à 40°C, ou à une température moyenne, par exemple comprise entre 40 et 65°C, au niveau de son absorbeur et de son condenseur pour servir au chauffage des utilisateurs finaux. L'évaporateur de la machine à absorption 21 est en contact avec un circuit intermédiaire permettant de prendre de la chaleur venant d'une source froide, qui est soit géothermie, soit composé d'aérothermes, soit une combinaison des deux.

L'eau chaude sort de la machine à absorption 21 à une température autour de 90°C pour entrer ensuite dans l'échangeur de chaleur 22 pour fournir de la chaleur au circuit d'ECS 4. Sortant de l'échangeur thermique 22, l'eau chaude est de température à titre d'exemple autour de 70°C et elle retourne ensuite dans le réseau de chaleur 1, et plus particulièrement dans une canalisation retour 12 du réseau de chaleur.

Dans ce mode de fonctionnement, deux canalisations illustrant le circuit de distribution de chauffage et de froid 3 servent à transporter du chauffage et les deux canalisations du circuit d'ECS 4 servent à transporter de l'ECS. Notons que le circuit d'ECS 4 peut aussi être utilisé pour fournir du chauffage en cas de besoin.

On observe que si le mode de fonctionnement de la sous-station 2 selon le premier mode de réalisation permet de produire du froid et de la chaleur pour l'eau chaude sanitaire, tandis que le mode de fonctionnement de la sous-station de selon le deuxième mode de régulation permet de produire du chauffage et de la chaleur pour l'eau chaude sanitaire, ces sous-station 2 comprennent les mêmes éléments fonctionnels à savoir essentiellement l'absorbeur 21 et l'échangeur thermique 22. Ce qui permet à ces mêmes éléments fonctionnels de produire soit du froid, soit du chauffage, en plus de fournir de la chaleur pour l'eau chaude sanitaire, consiste en une variation des liaisons fluidiques entre ces éléments fonctionnels.

Ainsi l'on comprend que, pour peu que la sous-station 2 comprenne en plus desdits éléments fonctionnels, au moins un commutateur fluidique dit « printemps-hiver », agencé pour commuter la sous-station entre :
- la configuration décrite ci-dessus de production de chaleur pour l'eau chaude sanitaire et de froid, et
- une configuration décrite ci-dessus de production de chaleur pour l'eau chaude sanitaire et de chauffage,
il est possible d'utiliser la même sous-station 2 durant toute l'année, en produisant du froid en été et du chauffage en hiver.

Un troisième mode de réalisation de l'invention va maintenant être décrit en référence à la figure 3.

Sur la figure 3 est illustré un mode de production conçu pour répondre aux besoins des utilisateurs finaux en été.

Ce mode de fonctionnement est une variante du premier mode de fonctionnement décrit ci-dessus. La seule différence est que : l'eau chaude, qui sert à alimenter la machine à absorption 21 en sort ensuite dans un dispositif de stockage thermique 23, avant d'entrer dans l'échangeur thermique 22. Le dispositif de stockage thermique 23 joue avantageusement le rôle de tampon. Plus particulièrement, lorsqu'il y a un appel à puissance pour produire de la chaleur pour l'ECS, le dispositif de stockage thermique 23 décharge de la chaleur pour en fournir au circuit de distribution d'eau chaude sanitaire 4 à travers l'échangeur thermique 22. Ce mode de fonctionnement est particulièrement intéressant pour lisser les pics d'appel de puissance d'ECS.

Comme l'illustre la figure 4, le même principe que celui décrit ci-dessus en référence à la figure 3, est applicable à la production de chauffage pour répondre aux besoins des utilisateurs finaux en hiver.

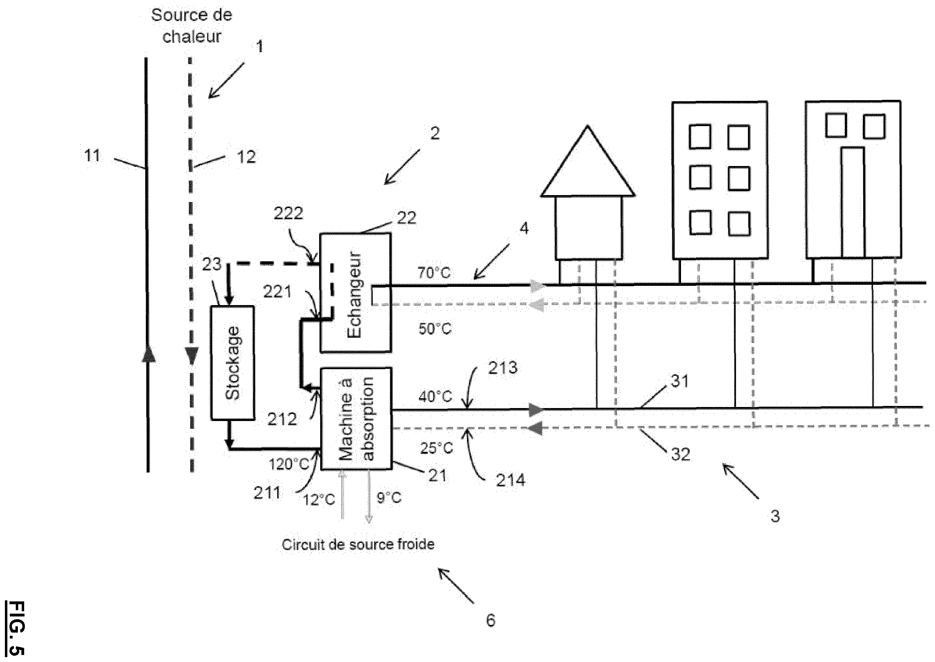

Un quatrième mode de réalisation de l'invention va maintenant être décrit en référence à la figure 5.

Sur la figure 5 est illustré un mode de production conçu pour répondre aux besoins des utilisateurs finaux en hiver. Toutefois, le même principe que celui décrit ci-dessous en référence à la figure 5, est applicable à la production de froid pour répondre aux besoins des utilisateurs finaux en été.

Dans ce mode de fonctionnement, un excès de chaleur du réseau de chaleur 1 est d'abord stocké dans le dispositif de stockage thermique 31. À cette fin, l'entrée du dispositif de stockage thermique 23 est en liaison fluidique avec la canalisation aller 11 du réseau de chaleur 1 et la sortie du dispositif de stockage thermique 23 est en liaison fluidique avec la canalisation retour 12 du réseau de chaleur 1. Ces liaisons fluidiques entre le réseau de chaleur 1 et le dispositif de stockage thermique 23 peuvent ensuite être commutées, de sorte à ce que le dispositif de stockage 23 remplace, au regard de la machine à absorption 21 et de l'échangeur thermique 22, le réseau de chaleur 1, en étant relié à la machine à absorption 21 et l'échangeur thermique 22 de la façon illustrée sur la figure 5.

Ainsi, une fois que le dispositif de stockage thermique 23 est chargé en chaleur, cette dernière peut être utilisée en décharge pour alimenter la machine à absorption 21 et notamment pour fournir de la chaleur pour l'ECS et pour produire du chauffage ou du froid.

Ce mode de fonctionnement est particulièrement intéressant car il permet d'optimiser l'utilisation de la chaleur du réseau 1.

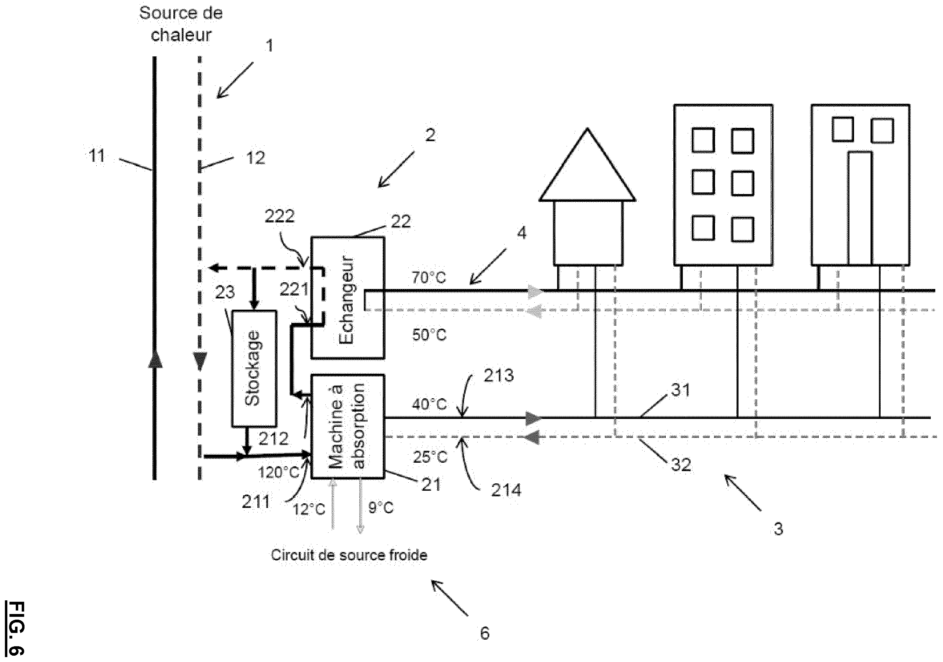

Un cinquième mode de réalisation de l'invention va maintenant être décrit en référence à la figure 6.

Sur la figure 6 est illustré un mode de production conçu pour répondre aux besoins des utilisateurs finaux en hiver. Toutefois, le même principe que celui décrit ci-dessous en référence à la figure 6, est applicable à la production de froid pour répondre aux besoins des utilisateurs finaux en été.

Ce mode de fonctionnement peut être considéré comme un mixe des premier, deuxième et quatrième modes de fonctionnement décrits ci-dessus. La machine à absorption y est alimentée à la fois par le réseau de chaleur 1 et par le dispositif de stockage thermique 23 (qui a été précédemment chargé). Ce mode permet d'optimiser l'utilisation de la chaleur venant du réseau 1 à travers le dispositif de stockage thermique 23, qui joue le rôle de tampon et apporte l'énergie complémentaire au système quand c'est nécessaire. À cette fin, on peut prévoir que la sous-station 2 comprenne un contrôleur de gestion fluidique agencée pour contrôler les flux entre :
- le réseau de chaleur 1 et la machine à absorption 21, et/ou
- le dispositif de stockage thermique 23 et la machine à absorption 21, et/ou
- la machine à absorption 21 et l'échangeur thermique 22, et/ou
- l'échangeur thermique 22 et le dispositif de stockage thermique 23.

Un lissage de pics d'appel de puissance sur le circuit de distribution de chauffage et de froid 3 et sur le circuit de distribution d'eau chaude sanitaire 4 par mise en oeuvre du dispositif de stockage thermique 23 et du contrôleur de gestion fluidique peut ainsi être atteint.

L'invention n'est pas limitée aux modes de réalisations précédemment décrits et s'étend à tous les modes de réalisation couverts par les revendications.

Par exemple, il est possible d'intégrer des dispositifs de stockage thermique additionnels en aval de la sous-station 2 pour stocker l'ECS, l'eau de chauffage ou l'eau froide.

Par exemple, chaque sous-station 2 décrite ci-dessus peut en outre comprendre une machine à compression mécanique de vapeur couplée à la machine à absorption 21.

Par exemple, les deux circuits de distribution que sont le circuit de distribution de chauffage ou de froid 3 et le circuit de distribution d'ECS 4 peuvent fonctionner en alternance l'un de l'autre, de sorte que le circuit de distribution de chauffage et de froid (3) et le circuit de distribution d'eau chaude sanitaire (4) puisse comprendre une même canalisation aller et/ou une même canalisation retour pour distribuer soit de l'ECS, soit du froid ou chauffage, et que le nombre de canalisations du système de production puisse ainsi être avantageusement réduit, à trois, voire à deux, canalisations dont au moins une canalisation aller et une canalisation retour.

## Revendications

1. Sous-station (2) pour source de chaleur (1) comprenant une machine à absorption (21) et un échangeur thermique (22),
une première entrée d'alimentation (211) de la machine à absorption (21) étant destinée à être en liaison fluidique avec une canalisation aller (11) de la source de chaleur (1),
une sortie d'évacuation (222) de l'échangeur thermique (22) étant destinée à être en liaison fluidique avec une canalisation retour (12) de la source de chaleur (1),
une première sortie d'évacuation (212) de la machine à absorption (21) étant en liaison fluidique avec une entrée d'alimentation (221) de l'échangeur thermique (22),
une seconde sortie d'évacuation (213) de la machine à absorption (21) étant destinée à être en liaison fluidique avec une canalisation aller (31) d'un circuit de distribution de chauffage et de froid (3), et
une seconde entrée d'alimentation (214) de la machine à absorption (21) étant en liaison fluidique avec une canalisation retour (32) du circuit de distribution de chauffage et de froid (3), et
dans laquelle l'échangeur thermique (22) est destiné à être couplé thermiquement avec un circuit de distribution d'eau chaude sanitaire (4),
la machine à absorption (21) comprenant un générateur, un absorbeur, un évaporateur, un condenseur et une pompe à solution,
**caractérisée en ce que** la sous-station comprend en outre au moins un commutateur fluidique dit « printemps-hiver », agencé pour commuter la sous-station entre :
- une configuration de production de chaleur sur le circuit de distribution d'eau chaude sanitaire (4) et de froid sur le circuit de distribution de chauffage et de froid (3), dans laquelle la seconde sortie d'évacuation (213) de la machine à absorption (21) est une sortie d'évacuation de l'évaporateur de la machine à absorption (21) et la seconde entrée d'alimentation (214) de la machine à absorption (21) est une entrée d'alimentation de l'évaporateur de la machine à absorption (21) et dans laquelle la machine à absorption (21) est destinée à être couplée thermiquement avec un circuit de refroidissement (5), et
- une configuration de production de chaleur sur le circuit de distribution d'eau chaude sanitaire (4) et de chauffage sur le circuit de distribution de chauffage et de froid (3), dans laquelle la seconde sortie d'évacuation (213) de la machine à absorption (21) est une sortie d'évacuation du condenseur de la machine à absorption (21) et la seconde entrée d'alimentation (214) de la machine à absorption (21) est une entrée d'alimentation de l'absorbeur de la machine à absorption (21) et dans laquelle la machine à absorption (21) est destinée à être couplée thermiquement avec un circuit de source froide (6).

2. Sous-station (2) selon la revendication précédente, dans laquelle la machine à absorption (21) est destinée à être couplée thermiquement avec un circuit de refroidissement (5) ou de source froide (6).

3. Sous-station (2) selon l'une quelconque des revendications précédentes :
- comprenant en outre un dispositif de stockage thermique (23) comprenant une entrée d'alimentation et une sortie d'évacuation, le dispositif de stockage thermique (23) étant par exemple choisi parmi un dispositif de stockage thermique par eau liquide avec ou sans pressurisation et un dispositif de stockage thermique par matériau à changement de phase, et
- dans laquelle l'entrée d'alimentation du dispositif de stockage thermique (23) est en liaison fluidique avec la première sortie d'évacuation (212) de la machine à absorption (21) et la sortie d'évacuation du dispositif de stockage thermique (23) est en liaison fluidique avec l'entrée d'alimentation (221) de l'échangeur thermique (22), la première sortie d'évacuation (212) de la machine à absorption (21) étant en liaison fluidique avec l'entrée d'alimentation (221) de l'échangeur thermique (22) via le dispositif de stockage thermique (23).

4. Sous-station (2) selon l'une quelconque des revendications 1 à 2, comprenant en outre :
- un dispositif de stockage thermique (23) comprenant une entrée d'alimentation et une sortie d'évacuation, le dispositif de stockage thermique (23) étant par exemple choisi parmi un dispositif de stockage thermique par eau liquide avec ou sans pressurisation et un dispositif de stockage thermique par matériau à changement de phase, et
- au moins un commutateur fluidique de charge et de décharge, agencé pour commuter la sous-station entre :
- une configuration de charge du dispositif de stockage thermique (23) dans laquelle l'entrée d'alimentation du dispositif de stockage thermique (23) est destinée à être en liaison fluidique avec la canalisation aller (11) de la source de chaleur (1) et la sortie d'évacuation du dispositif de stockage thermique (23) est destinée à être en liaison fluidique avec la canalisation retour (12) de la source de chaleur (1), et
- une configuration de décharge du dispositif de stockage thermique (23) dans laquelle l'entrée d'alimentation du dispositif de stockage thermique (23) est en liaison fluidique avec la première entrée d'alimentation (211) de la machine à absorption (21) et la sortie d'évacuation du dispositif de stockage thermique (23) est en liaison fluidique avec la sortie d'évacuation (222) de l'échangeur thermique (22).

5. Sous-station (2) selon l'une quelconque des revendications 1 à 2 comprenant en outre :
- un dispositif de stockage thermique (23) comprenant une entrée d'alimentation et une sortie d'évacuation, le dispositif de stockage thermique (23) étant par exemple choisi parmi un dispositif de stockage thermique par eau liquide avec ou sans pressurisation et un dispositif de stockage thermique par matériau à changement de phase, et
- au moins un contrôleur de gestion fluidique, agencé pour gérer une configuration d'alimentation de la machine à absorption par la source de chaleur (1) et/ou le dispositif de stockage thermique (23),
dans laquelle :
l'entrée d'alimentation du dispositif de stockage thermique (23) est en liaison fluidique avec la sortie d'évacuation (222) de l'échangeur thermique (22) et/ou avec la canalisation retour (12) de la source de chaleur (1), et
la sortie d'évacuation du dispositif de stockage thermique (23) est en liaison fluidique avec la première entrée d'alimentation (211) de la machine à absorption (21) et/ou avec la canalisation aller (11) de la source de chaleur (1).

6. Système de production de chaleur pour l'eau chaude sanitaire (ECS), de chauffage et de froid, comprenant une source de chaleur (1), au moins un circuit de distribution de chauffage et de froid (3), au moins un circuit de distribution d'eau chaude sanitaire (4) et au moins une sous-station (2) selon l'une quelconque des revendications précédentes, dans lequel la source de chaleur comprend au moins l'un parmi :
- un réseau de chaleur,
- un réseau de récupération de chaleur fatale
- un dispositif de captation de chaleur solaire, et
- un dispositif de stockage thermique dont une entrée d'alimentation est en liaison fluidique avec la canalisation aller (11) de la source de chaleur (1) et dont une sortie d'évacuation est en liaison fluidique avec la canalisation retour (12) de la source de chaleur (1).

7. Système selon la revendication précédente, dans lequel le circuit de distribution de chauffage et de froid (3) et le circuit de distribution d'eau chaude sanitaire (4) comprennent une même canalisation aller et/ou une même canalisation retour, le cas échéant le circuit de distribution de chauffage et de froid (3) et le circuit de distribution d'eau chaude sanitaire (4) étant utilisés en alternance.

8. Procédé de fonctionnement d'une sous-station (2) de source de chaleur (1) comprenant une machine à absorption (21) et un échangeur thermique (22),
une première entrée d'alimentation (211) de la machine à absorption (21) étant destinée à être en liaison fluidique avec une canalisation aller (11) de la source de chaleur (1),
une sortie d'évacuation (222) de l'échangeur thermique (22) étant destinée à être en liaison fluidique avec une canalisation retour (12) de la source de chaleur (1),
une première sortie d'évacuation (212) de la machine à absorption (21) étant en liaison fluidique avec une entrée d'alimentation (221) de l'échangeur thermique (22),
une seconde sortie d'évacuation (213) de la machine à absorption (21) étant destinée à être en liaison fluidique avec une canalisation aller (31) d'un circuit de distribution de chauffage et de froid (3), et
une seconde entrée d'alimentation (214) de la machine à absorption (21) étant en liaison fluidique avec une canalisation retour (32) du circuit de distribution de chauffage et de froid (3),
l'échangeur thermique (22) étant destiné à être couplé thermiquement avec un circuit de distribution d'eau chaude sanitaire (4),
le procédé étant tel que la machine à absorption (21) est utilisée pour fournir, outre de la chaleur au circuit de distribution d'eau chaude sanitaire (4) via l'échangeur thermique (22), alternativement du chauffage et du froid au circuit de distribution de chauffage et de froid (3),
la machine à absorption (21) comprenant un générateur, un absorbeur, un évaporateur, un condenseur et une pompe à solution,
le procédé comprenant en outre au moins une étape de commutation de la sous-station, par mise en oeuvre d'un commutateur fluidique dit « printemps-hiver », entre :
- une configuration de production de chaleur sur le circuit de distribution d'eau chaude sanitaire (4) et de froid sur le circuit de distribution de chauffage et de froid (3) par :
∘ le couplage thermique de la machine à absorption (21) avec un circuit de refroidissement (5),
∘ l'alimentation de la machine à absorption (21) par une entrée d'alimentation de l'évaporateur de la machine à absorption (21) en tant que seconde entrée d'alimentation (214) de la machine à absorption (21), et
∘ l'évacuation depuis la machine à absorption (21) par une sortie d'évacuation de l'évaporateur de la machine à absorption (21) en tant que seconde sortie (213) de la machine à absorption (21),
de sorte à fournir de la chaleur au circuit de distribution d'eau chaude sanitaire (4) et à produire du froid sur le circuit de distribution de chauffage et de froid (3),
- une configuration de production de chaleur sur le circuit de distribution d'eau chaude sanitaire (4) et de chauffage sur le circuit de distribution de chauffage et de froid (3) par :
∘ le couplage thermique de la machine à absorption (21) avec un circuit de source froide (6),
∘ l'alimentation de la machine à absorption (21) par une entrée d'alimentation de l'absorbeur de la machine à absorption (21) en tant que seconde entrée d'alimentation (214) de la machine à absorption (21), et
∘ l'évacuation depuis la machine à absorption (21) par une sortie d'évacuation du condenseur de la machine à absorption (21) en tant que seconde sortie (213) de la machine à absorption (21),
de sorte à fournir de la chaleur au circuit de distribution d'eau chaude sanitaire (4) et à produire du chauffage sur le circuit de distribution de chauffage et de froid (3).

9. Procédé de fonctionnement selon la revendication précédente, dans lequel, avec la sous-station comprenant en outre un dispositif de stockage thermique (23), le procédé comprend en outre :
- le lissage de pics d'appel de puissance sur le circuit de distribution d'eau chaude sanitaire (4) par mise en oeuvre du dispositif de stockage thermique (23),
une entrée d'alimentation du dispositif de stockage thermique (23) étant en liaison fluidique avec la première sortie d'évacuation (212) de la machine à absorption (21) et une sortie d'évacuation du dispositif de stockage thermique (23) étant en liaison fluidique avec l'entrée d'alimentation (221) de l'échangeur thermique (22), la première sortie d'évacuation (212) de la machine à absorption (21) étant en liaison fluidique avec l'entrée d'alimentation (221) de l'échangeur thermique (22) via le dispositif de stockage thermique (23).

10. Procédé de fonctionnement selon l'une quelconque des revendications 8 et 9, dans lequel, avec la sous-station (2) comprenant en outre un dispositif de stockage thermique (23) et au moins un commutateur fluidique de charge et de décharge, ce dernier étant agencé pour commuter la sous-station (2) entre :
- une configuration de charge du dispositif de stockage thermique (23) dans laquelle une entrée d'alimentation du dispositif de stockage thermique (23) est destinée à être en liaison fluidique avec la canalisation aller (11) de la source de chaleur (1) et une sortie d'évacuation du dispositif de stockage thermique (23) est destinée à être en liaison fluidique avec la canalisation retour (12) de la source de chaleur (1), et
- une configuration de décharge du dispositif de stockage thermique (23) dans laquelle l'entrée d'alimentation du dispositif de stockage thermique (23) est en liaison fluidique avec la première entrée d'alimentation (211) de la machine à absorption (21) et la sortie d'évacuation du dispositif de stockage thermique (23) est en liaison fluidique avec la sortie d'évacuation (222) de l'échangeur thermique (22),
le procédé comprend en outre :
- le lissage de pics d'appel de puissance sur le circuit de distribution d'eau chaude sanitaire (4) par mise en oeuvre du dispositif de stockage thermique (23) et du commutateur fluidique de charge et de décharge.

11. Procédé de fonctionnement selon l'une quelconque des revendications 8 et 9, dans lequel, avec la sous-station (2) comprenant en outre un dispositif de stockage thermique (23) et au moins un contrôleur de gestion fluidique, ce dernier étant agencé pour gérer une configuration d'alimentation de la machine à absorption par la source de chaleur (1) et/ou le dispositif de stockage thermique (23), dans laquelle :
- l'entrée d'alimentation du dispositif de stockage thermique (23) est en liaison fluidique avec la sortie d'évacuation (222) de l'échangeur thermique (22) et/ou avec la canalisation retour (12) de la source de chaleur (1), et
- la sortie d'évacuation du dispositif de stockage thermique (23) est en liaison fluidique avec la première entrée d'alimentation (211) de la machine à absorption (21) et/ou avec la canalisation aller (11) de la source de chaleur (1),
le procédé comprend en outre :
- le lissage de pics d'appel de puissance sur le circuit de distribution de chauffage et de froid (3) et sur le circuit de distribution d'eau chaude sanitaire (4) par mise en oeuvre du dispositif de stockage thermique (23) et du contrôleur de gestion fluidique.

## Patentansprüche

1. Unterstation (2) für Wärmequelle (1), die eine Absorptionsmaschine (21) und einen Wärmetauscher (22) umfasst,
wobei ein erster Versorgungseingang (211) der Absorptionsmaschine (21) dazu bestimmt ist, strömungstechnisch in Verbindung mit einer Vorlaufleitung (11) der Wärmequelle (1) zu stehen,
ein Austragsausgang (222) des Wärmetauschers (22) dazu bestimmt ist, strömungstechnisch in Verbindung mit einer Rücklaufleitung (12) der Wärmequelle (1) zu stehen,
ein erster Austragsausgang (212) der Absorptionsmaschine (21) strömungstechnisch in Verbindung mit einem Versorgungseingang (221) des Wärmetauschers (22) steht, ein zweiter Austragsausgang (213) der Absorptionsmaschine (21) dazu bestimmt ist, strömungstechnisch in Verbindung mit einer Vorlaufleitung (31) eine Heiz- und Kühlverteilungskreislaufs (3) zu stehen, und
ein zweiter Versorgungseingang (214) der Absorptionsmaschine (21) strömungstechnisch in Verbindung mit einer Rücklaufleitung (32) des Heiz- und Kühlverteilungskreislaufs (3) steht, und
wobei der Wärmetauscher (22) dazu bestimmt ist, thermisch mit einem Brauchwarmwasserverteilungskreislauf (4) gekoppelt zu sein;
wobei die Absorptionsmaschine (21) einen Generator, einen Absorber, einen Verdampfer, einen Kondensator und eine Lösungspumpe umfasst,
**dadurch gekennzeichnet, dass** die Unterstation weiter mindestens einen sogenannten "Frühjahr-Winter"-Fluidumschalter umfasst, der angeordnet ist, um die Unterstation umzuschalten zwischen:
- einer Konfiguration zum Erzeugen von Wärme im Brauchwarmwasserverteilungskreislauf (4) und von Kälte im Heiz- und Kühlverteilungskreislauf (3), in welcher der zweite Austragsausgang (213) der Absorptionsmaschine (21) ein Austragsausgang des Verdampfers der Absorptionsmaschine (21) ist, und der zweite Versorgungseingang (214) der Absorptionsmaschine (21) ein Versorgungseingang des Verdampfers der Absorptionsmaschine (21) ist, und in welcher die Absorptionsmaschine (21) dazu bestimmt ist, thermisch mit einem Kühlkreislauf (5) gekoppelt zu werden, und
- einer Konfiguration zum Erzeugen von Wärme im Brauchwarmwasserverteilungskreislauf (4) und von Heizung im Heiz- und Kühlverteilungskreislauf (3), in welcher der zweite Austragsausgang (213) der Absorptionsmaschine (21) ein Austragsausgang des Kondensators der Absorptionsmaschine (21) ist, und der zweite Versorgungseingang (214) der Absorptionsmaschine (21) ein Versorgungseingang des Absorbers der Absorptionsmaschine (21) ist, und in der die Absorptionsmaschine (21) dazu bestimmt ist, thermisch mit einem Kältequellenkreislauf (6) gekoppelt zu werden.

2. Unterstation (2) nach dem vorstehenden Anspruch, wobei die Absorptionsmaschine (21) dazu bestimmt ist, thermisch mit einem Kühl- (5) oder einem Kältequellenkreislauf (6) gekoppelt zu werden.

3. Unterstation (2) nach einem der vorstehenden Ansprüche:
- weiter umfassend eine thermische Speichervorrichtung (23), die einen Versorgungseingang und einen Austragsausgang umfasst, wobei die thermische Speichervorrichtung (23) beispielsweise aus einer thermischen Speichervorrichtung durch flüssiges Wasser mit oder ohne Druckaufschlag, und einer thermischen Speichervorrichtung durch einen Phasenänderungswerkstoff ausgewählt ist, und
- wobei der Versorgungseingang der thermischen Speichervorrichtung (23) strömungstechnisch in Verbindung mit einem ersten Austragsausgang (212) der Absorptionsmaschine (21) steht und der Austragsausgang der thermischen Speichervorrichtung (23) strömungstechnisch in Verbindung mit dem Versorgungseingang (221) des Wärmetauschers (22) steht, wobei der erste Austragsausgang (212) der Absorptionsmaschine (21) über die thermische Speichervorrichtung (23) strömungstechnisch in Verbindung mit dem Versorgungseingang (221) des Wärmetauschers (22) steht.

4. Unterstation (2) nach einem der Ansprüche 1 bis 2, weiter umfassend:
- eine thermische Speichervorrichtung (23), die einen Versorgungseingang und einen Austragsausgang umfasst, wobei die thermische Speichervorrichtung (23) beispielsweise aus einer thermischen Speichervorrichtung durch flüssiges Wasser mit oder ohne Druckaufschlag, und einer thermischen Speichervorrichtung durch einen Phasenänderungswerkstoff ausgewählt ist, und
- mindestens einen Fluidumschalter zum Laden und Entladen, der angeordnet ist, um die Unterstation umzuschalten zwischen:
- einer Konfiguration zum Laden der thermischen Speichervorrichtung (23), in welcher der Versorgungseingang der thermischen Speichervorrichtung (23) dazu bestimmt ist, strömungstechnisch in Verbindung mit der Vorlaufleitung (11) der Wärmequelle (1) zu stehen, und der Austragsausgang der thermischen Speichervorrichtung (23) dazu bestimmt ist, strömungstechnisch in Verbindung mit der Rücklaufleitung (12) der Wärmequelle (1) zu stehen, und
- einer Konfiguration zum Entladen der thermischen Speichervorrichtung (23), in welcher der Versorgungseingang der thermischen Speichervorrichtung (23) strömungstechnisch in Verbindung mit dem ersten Versorgungseingang (211) der Absorptionsmaschine (21) steht, und der Austragsausgang der thermischen Speichervorrichtung (23) strömungstechnisch in Verbindung mit dem Austragsausgang (222) des Wärmetauschers (22) steht.

5. Unterstation (2) nach einem der Ansprüche 1 bis 2, weiter umfassend:
- eine thermische Speichervorrichtung (23), die einen Versorgungseingang und einen Austragsausgang umfasst, wobei die thermische Speichervorrichtung (23) beispielsweise aus einer thermischen Speichervorrichtung durch flüssiges Wasser mit oder ohne Druckaufschlag, und einer thermischen Speichervorrichtung durch einen Phasenänderungswerkstoff ausgewählt ist, und
- mindestens eine Steuereinheit zur Fluidverwaltung, die angeordnet ist, um eine Versorgungskonfiguration der Absorptionsmaschine durch die Wärmequelle (1) und/oder die thermische Speichervorrichtung (23) zu verwalten,
in der:
der Versorgungseingang der thermischen Speichervorrichtung (23) strömungstechnisch in Verbindung mit dem Austragsausgang (222) des Wärmetauschers (22) und/oder mit der Rücklaufleitung (12) der Wärmequelle (1) steht, und
der Austragsausgang der thermischen Speichervorrichtung (23) strömungstechnisch in Verbindung mit dem ersten Versorgungseingang (211) der Absorptionsmaschine (21) und/oder mit der Vorlaufleitung (11) der Wärmequelle (1) steht.

6. System zum Erzeugen von Wärme für warmes Brauchwasser (ECS), Heizung und Kühlung, umfassend eine Wärmequelle (1), mindestens einen Heiz- und Kühlverteilungskreislauf (3), mindestens einen Brauchwarmwasserverteilungskreislauf (4) und mindestens eine Unterstation (2) nach einem der vorstehenden Ansprüche, wobei die Wärmequelle mindestens eines umfasst aus:
- einem Wärmenetz,
- einem Abwärme-Rückgewinnungsnetz,
- einer Vorrichtung zum Auffangen von Sonnenwärme,
- einer thermischen Speichervorrichtung, von der ein Versorgungseingang strömungstechnisch in Verbindung mit der Vorlaufleitung (11) der Wärmequelle (1) steht, und von der ein Austragsausgang strömungstechnisch in Verbindung mit der Rücklaufleitung (12) der Wärmequelle (1) steht.

7. System nach dem vorstehenden Anspruch, wobei der Heiz- und Kühlverteilungskreislauf (3) und der Brauchwarmwasserverteilungskreislauf (4) eine gleiche Vorlaufleitung und/oder eine gleiche Rücklaufleitung umfassen, wobei gegebenenfalls der Heiz- und Kühlverteilungskreislauf (3) und der Brauchwarmwasserverteilungskreislauf (4) abwechselnd verwendet werden.

8. Verfahren zum Betreiben einer Unterstation (2) einer Wärmequelle (1), die eine Absorptionsmaschine (21) und einen Wärmetauscher (22) umfasst,
wobei ein erster Versorgungseingang (211) der Absorptionsmaschine (21) dazu bestimmt ist, strömungstechnisch in Verbindung mit einer Vorlaufleitung (11) der Wärmequelle (1) zu stehen,
ein Austragsausgang (222) des Wärmetauschers (22) dazu bestimmt ist, strömungstechnisch in Verbindung mit einer Rücklaufleitung (12) der Wärmequelle (1) zu stehen,
ein erster Austragsausgang (212) der Absorptionsmaschine (21) strömungstechnisch in Verbindung mit einem Versorgungseingang (221) des Wärmetauschers (22) steht, ein zweiter Austragsausgang (213) der Absorptionsmaschine (21) dazu bestimmt ist, strömungstechnisch in Verbindung mit einer Vorlaufleitung (31) eines Heiz- und Kühlverteilungskreislaufs (3) zu stehen, und
ein zweiter Versorgungseingang (214) der Absorptionsmaschine (21) strömungstechnisch in Verbindung mit einer Rücklaufleitung (32) des Heiz- und Kühlverteilungskreislaufs (3) steht,
wobei der Wärmetauscher (22) dazu bestimmt ist, thermisch mit einem Brauchwarmwasserverteilungskreislauf (4) gekoppelt zu sein;
wobei das Verfahren dergestalt ist, dass die Absorptionsmaschine (21) verwendet wird, um neben der Wärme für den Brauchwarmwasserverteilungskreislauf (4) über den Wärmetauscher (22) dem Heiz- und Kühlverteilungskreislauf (3) abwechselnd Heizung und Kühlung bereitzustellen,
wobei die Absorptionsmaschine (21) einen Generator, einen Absorber, einen Verdampfer, einen Kondensator und eine Lösungspumpe umfasst,
wobei das Verfahren weiter mindestens einen Schritt zum Umschalten der Unterstation durch den Einsatz eines sogenannten "Frühjahr-Winter"-Fluidumschalters umfasst, zwischen:
- einer Konfiguration zum Erzeugen von Wärme im Brauchwarmwasserverteilungskreislauf (4) und von Kälte im Heiz- und Kühlverteilungskreislauf (3), durch:
∘ thermisches Koppeln der Absorptionsmaschine (21) mit einem Kühlkreislauf (5),
∘ Versorgen der Absorptionsmaschine (21) über einen Versorgungseingang des Verdampfers der Absorptionsmaschine (21) als zweiten Versorgungseingang (214) der Absorptionsmaschine (21), und
∘ Austragen aus der Absorptionsmaschine (21) durch einen Austragsausgang des Verdampfers der Absorptionsmaschine (21) als zweiten Ausgang (213) der Absorptionsmaschine (21),
um dem Brauchwarmwasserverteilungskreislauf (4) Wärme bereitzustellen, und im Heiz- und Kühlverteilungskreislauf (3) Kälte zu erzeugen,
- einer Konfiguration zum Erzeugen von Wärme im Brauchwarmwasserverteilungskreislauf (4) und von Heizung im Heiz- und Kühlverteilungskreislauf (3), durch:
∘ thermisches Koppeln der Absorptionsmaschine (21) mit einem Kältequellenkreislauf (6),
∘ Versorgen der Absorptionsmaschine (21) durch einen Versorgungseingang des Absorbers der Absorptionsmaschine (21) als zweiten Versorgungseingang (214) der Absorptionsmaschine (21), und
∘ Austragen aus der Absorptionsmaschine (21) durch einen Austragsausgang des Kondensators der Absorptionsmaschine (21) als zweiten Ausgang (213) der Absorptionsmaschine (21),
um dem Brauchwarmwasserverteilungskreislauf (4) Wärme bereitzustellen und um im Heiz- und Kühlverteilungskreislauf (3) Heizung zu erzeugen.

9. Verfahren zum Betreiben nach dem vorstehenden Anspruch, wobei das Verfahren mit der Unterstation, die weiter eine thermische Speichervorrichtung (23) umfasst, weiter umfasst:
- das Glätten von Leistungsabrufspitzen im Brauchwarmwasserverteilungskreislauf (4) durch den Einsatz der der thermischen Speichervorrichtung (23),
wobei ein Versorgungseingang der thermischen Speichervorrichtung (23) strömungstechnisch in Verbindung mit einem ersten Austragsausgang (212) der Absorptionsmaschine (21) steht und der Austragsausgang der thermischen Speichervorrichtung (23) strömungstechnisch in Verbindung mit dem Versorgungseingang (221) des Wärmetauschers (22) steht, wobei der erste Austragsausgang (212) der Absorptionsmaschine (21) über die thermische Speichervorrichtung (23) strömungstechnisch in Verbindung mit dem Versorgungseingang (221) des Wärmetauschers (22) steht.

10. Verfahren zum Betreiben nach einem der Ansprüche 8 und 9, wobei mit der Unterstation (2), die weiter eine thermische Speichervorrichtung (23) und mindestens einen Fluidumschalter zum Laden und Entladen umfasst, dieser letztere angeordnet ist, um die Unterstation (2) umzuschalten zwischen:
- einer Konfiguration zum Laden der thermischen Speichervorrichtung (23), in welcher der Versorgungseingang der thermischen Speichervorrichtung (23) dazu bestimmt ist, strömungstechnisch in Verbindung mit der Vorlaufleitung (11) der Wärmequelle (1) zu stehen, und der Austragsausgang der thermischen Speichervorrichtung (23) dazu bestimmt ist, strömungstechnisch in Verbindung mit der Rücklaufleitung (12) der Wärmequelle (1) zu stehen, und
- einer Konfiguration zum Entladen der thermischen Speichervorrichtung (23), in welcher der Versorgungseingang der thermischen Speichervorrichtung (23) strömungstechnisch in Verbindung mit dem ersten Versorgungseingang (211) der Absorptionsmaschine (21) steht, und der Austragsausgang der thermischen Speichervorrichtung (23) strömungstechnisch in Verbindung mit dem Austragsausgang (222) des Wärmetauschers (22) steht,
das Verfahren weiter umfasst:
- das Glätten von Leistungsabrufspitzen im Brauchwarmwasserverteilungskreislauf (4) durch den Einsatz der thermischen Speichervorrichtung (23) und des Fluidumschalters zum Laden und Entladen.

11. Verfahren zum Betreiben nach einem der Ansprüche 8 und 9, wobei mit der Unterstation (2), die weiter eine thermische Speichervorrichtung (23) und mindestens eine Steuereinheit zur Fluidverwaltung umfasst, wobei diese letztere angeordnet ist, um eine Versorgungskonfiguration der Absorptionsmaschine durch die Wärmequelle (1) und/oder die thermische Speichervorrichtung (23) zu verwalten, in welcher:
- der Versorgungseingang der thermischen Speichervorrichtung (23) strömungstechnisch in Verbindung mit dem Austragsausgang (222) des Wärmetauschers (22) und/oder mit der Rücklaufleitung (12) der Wärmequelle (1) steht, und
- der Austragsausgang der thermischen Speichervorrichtung (23) strömungstechnisch in Verbindung mit dem ersten Versorgungseingang (211) der Absorptionsmaschine (21) und/oder mit der Vorlaufleitung (11) der Wärmequelle (1) steht,
das Verfahren weiter umfasst:
- das Glätten von Leistungsabrufspitzen im Heiz- und Kühlverteilungskreislauf (3) und im Brauchwarmwasserverteilungskreislauf (4) durch den Einsatz der thermischen Speichervorrichtung (23) und der Steuereinheit zur Fluidverwaltung.

## Claims

1. The substation (2) for heat source (1) comprising an absorption machine (21) and a heat exchanger (22),
a first supply inlet (211) of the absorption machine (21) being intended to be in fluid connection with a feed line (11) of the heat source (1),
an evacuation outlet (222) of the heat exchanger (22) being intended to be in fluid connection with a return line (12) of the heat source (1),
a first evacuation outlet (212) of the absorption machine (21) being in fluid connection with a supply inlet (221) of the heat exchanger (22),
a second evacuation outlet (213) of the absorption machine (21) being intended to be in fluid connection with a feed line (31) of a heating and cooling distribution circuit (3), and
a second supply inlet (214) of the absorption machine (21) being in fluid connection with a return line (32) of the heating and cooling distribution circuit (3), and wherein the heat exchanger (22) is intended to be thermally coupled with a domestic hot water distribution circuit (4), the absorption machine (21) comprising a generator, an absorber, an evaporator, a condenser and a solution pump, **characterised in that** the substation further comprises at least one fluidic switch called "spring-winter" fluidic switch, arranged to switch the substation between:
- a configuration of producing heat on the domestic hot water distribution circuit (4) and cold on the heating and cooling distribution circuit (3), wherein the second evacuation outlet (213) of the absorption machine (21) is an evacuation outlet of the evaporator of the absorption machine (21) and the second supply inlet (214) of the absorption machine (21) is a supply inlet of the evaporator of the absorption machine (21) and wherein the absorption machine (21) is intended to be thermally coupled with a cooling circuit (5), and
- a configuration of producing heat on the domestic hot water distribution circuit (4) and heating on the heating and cooling distribution circuit (3), wherein the second evacuation outlet (213) of the absorption machine (21) is an evacuation outlet of the condenser of the absorption machine (21) and the second supply inlet (214) of the absorption machine (21) is a supply inlet of the absorber of the absorption machine (21) and wherein the absorption machine (21) is intended to be thermally coupled with a cold source circuit (6).

2. The substation (2) according to the preceding claim, wherein the absorption machine (21) is intended to be thermally coupled with a cooling (5) or cold source (6) circuit.

3. The substation (2) according to any one of the preceding claims:
- further comprising a thermal storage device (23) comprising a supply inlet and an evacuation outlet, the thermal storage device (23) being for example selected from a liquid water thermal storage device with or without pressurisation and a phase change material thermal storage device, and
- wherein the supply inlet of the thermal storage device (23) is in fluid connection with the first evacuation outlet (212) of the absorption machine (21) and the evacuation outlet of the thermal storage device (23) is in fluid connection with the supply inlet (221) of the heat exchanger (22), the first evacuation outlet (212) of the absorption machine (21) being in fluid connection with the supply inlet (221) of the heat exchanger (22) via the thermal storage device (23).

4. The substation (2) according to any one of claims 1 to 2, further comprising:
- a thermal storage device (23) comprising a supply inlet and an evacuation outlet, the thermal storage device (23) being for example selected from a liquid water thermal storage device with or without pressurisation and a phase change material thermal storage device, and at least one fluidic charge and discharge switch, arranged to switch the substation between:
- a configuration of charging the thermal storage device (23) wherein the supply inlet of the thermal storage device (23) is intended to be in fluid connection with the feed line (11) of the heat source (1) and the evacuation outlet of the thermal storage device (23) is intended to be in fluid connection with the return line (12) of the heat source (1), and
- a configuration of discharging the thermal storage device (23) wherein the supply inlet of the thermal storage device (23) is in fluid connection with the first supply inlet (211) of the absorption machine (21) and the evacuation outlet of the thermal storage device (23) is in fluid connection with the evacuation outlet (222) of the heat exchanger (22).

5. The substation (2) according to any one of claims 1 to 2 further comprising:
- a thermal storage device (23) comprising a supply inlet and an evacuation outlet, the thermal storage device (23) being for example selected from a liquid water thermal storage device with or without pressurisation and a phase change material thermal storage device, and
- at least one fluid management controller, arranged to manage a supply configuration of the absorption machine by the heat source (1) and/or the thermal storage device (23), wherein:
the supply inlet of the thermal storage device (23) is in fluid connection with the evacuation outlet (222) of the heat exchanger (22) and/or with the return line (12) of the heat source (1), and
the evacuation outlet of the thermal storage device (23) is in fluid connection with the first supply inlet (211) of the absorption machine (21) and/or with the feed line (11) of the heat source (1).

6. A heat production system for domestic hot water (DHW), for heating and cooling, comprising a heat source (1), at least one heating and cooling distribution circuit (3), at least one domestic hot water distribution circuit (4) and at least one substation (2) according to any one of the preceding claims, wherein the heat source comprises at least one of:
- a heat network,
- a waste heat recovery network,
- a solar heat-trapping device, and
- a thermal storage device, a supply inlet of which is in fluid connection with the feed line (11) of the heat source (1) and an evacuation outlet of which is in fluid connection with the return line (12) of the heat source (1).

7. The system according to the preceding claim, wherein the heating and cooling distribution circuit (3) and the domestic hot water distribution circuit (4) comprise the same feed line and/or the same return line, where appropriate the heating and cooling distribution circuit (3) and the domestic hot water distribution circuit (4) being used alternately.

8. A method for operating a substation (2) of a heat source (1) comprising an absorption machine (21) and a heat exchanger (22),
a first supply inlet (211) of the absorption machine (21) being intended to be in fluid connection with a feed line (11) of the heat source (1),
an evacuation outlet (222) of the heat exchanger (22) being intended to be in fluid connection with a return line (12) of the heat source (1),
a first evacuation outlet (212) of the absorption machine (21) being in fluid connection with a supply inlet (221) of the heat exchanger (22),
a second evacuation outlet (213) of the absorption machine (21) being intended to be in fluid connection with a feed line (31) of a heating and cooling distribution circuit (3), and
a second supply inlet (214) of the absorption machine (21) being in fluid connection with a return line (32) of the heating and cooling distribution circuit (3),
the heat exchanger (22) being intended to be thermally coupled with a domestic hot water distribution circuit (4), the method being such that the absorption machine (21) is used to supply, in addition to heat to the domestic hot water distribution circuit (4) via the heat exchanger (22), alternately heating and cooling to the heating and cooling distribution circuit (3),
the absorption machine (21) comprising a generator, an absorber, an evaporator, a condenser and a solution pump, the method further comprising at least one step of switching the substation, by implementing a fluidic switch called "spring-winter" fluidic switch, between:
- a configuration of producing heat on the domestic hot water distribution circuit (4) and cold on the heating and cooling distribution circuit (3) by:
- thermally coupling the absorption machine (21) with a cooling circuit (5),
- supplying the absorption machine (21) through a supply inlet of the evaporator of the absorption machine (21) as a second supply inlet (214) of the absorption machine (21), and
- evacuation from the absorption machine (21) through an evacuation outlet of the evaporator of the absorption machine (21) as a second outlet (213) of the absorption machine (21),
so as to supply heat to the domestic hot water distribution circuit (4) and to produce cold on the heating and cooling distribution circuit (3),
- a configuration of producing heat on the domestic hot water distribution circuit (4) and heating on the heating and cooling distribution circuit (3) by:
- thermally coupling the absorption machine (21) with a cold source circuit (6),
- supplying the absorption machine (21) through a supply inlet of the absorber of the absorption machine (21) as a second supply inlet (214) of the absorption machine (21), and
- evacuation from the absorption machine (21) through an evacuation outlet of the condenser of the absorption machine (21) as a second outlet (213) of the absorption machine (21),
so as to supply heat to the domestic hot water distribution circuit (4) and to produce heating on the heating and cooling distribution circuit (3).

9. The operation method according to the preceding claim, wherein, with the substation further comprising a thermal storage device (23), the method further comprises:
- smoothing power demand peaks on the domestic hot water distribution circuit (4) by implementing the thermal storage device (23),
a supply inlet of the thermal storage device (23) being in fluid connection with the first evacuation outlet (212) of the absorption machine (21) and an evacuation outlet of the thermal storage device (23) being in fluid connection with the supply inlet (221) of the heat exchanger (22), the first evacuation outlet (212) of the absorption machine (21) being in fluid connection with the supply inlet (221) of the heat exchanger (22) via the thermal storage device (23) .

10. The operating method according to any one of claims 8 and 9, wherein, with the substation (2) further comprising a thermal storage device (23) and at least one fluidic charge and discharge switch, the latter being arranged to switch the substation (2) between:
- a configuration of charging the thermal storage device (23) wherein a supply inlet of the thermal storage device (23) is intended to be in fluid connection with the feed line (11) of the heat source (1) and an evacuation outlet of the thermal storage device (23) is intended to be in fluid connection with the return line (12) of the heat source (1), and
- a configuration of discharging the thermal storage device (23) wherein the supply inlet of the thermal storage device (23) is in fluid connection with the first supply inlet (211) of the absorption machine (21) and the evacuation outlet of the thermal storage device (23) is in fluid connection with the evacuation outlet (222) of the heat exchanger (22),
the method further comprises:
- smoothing power demand peaks on the domestic hot water distribution circuit (4) by implementing the thermal storage device (23) and the fluidic charge and discharge switch.

11. The operating method according to any one of claims 8 and 9, wherein, with the substation (2) further comprising a thermal storage device (23) and at least one fluid management controller, the latter being arranged to manage a supply configuration of the absorption machine by the heat source (1) and/or the thermal storage device (23), wherein:
- the supply inlet of the thermal storage device (23) is in fluid connection with the evacuation outlet (222) of the heat exchanger (22) and/or with the return line (12) of the heat source (1), and
- the evacuation outlet of the thermal storage device (23) is in fluid connection with the first supply inlet (211) of the absorption machine (21) and/or with the feed line (11) of the heat source (1),
the method further comprises:
- smoothing power demand peaks on the heating and cooling distribution circuit (3) and on the domestic hot water distribution circuit (4) by implementing the thermal storage device (23) and the fluid management controller.
